# EUROPEAN PATENT APPLICATION

(11) **EP 1 894 822 A1**
(43) Date of publication of application: **05.03.2008**
(21) Application number: 07115521.2
(22) Date of filing: 03.09.2007
(51) Int. Cl.: B62D 59/04

(54) **Apparatus for moving a trailer**

(30) Priority: 04.09.2006 GB 0617403
(71) Applicant: Purple Line Limited, Hadleigh Ipswich Suffolk IP7 6BQ (GB); Carman Enterprise Co. Limited, 310006 Hangzhou (CN); TradeKar International B.V., 4104 AR Culemborg (NL)
(72) Inventor: Barrow, Stuart, Ipswich, Suffolk IP7 6BQ (GB); Xianwei, Li, 310006 Hangzhou (CN); Markusse, Alexander, Culemborg 4104 AR (NL)
(74) Representative: Gemmell, Peter Alan

(57) **Abstract**

The invention provides apparatus (6) for moving a trailer. The apparatus has at least one drive unit (8) a drive unit mounting (16) and an actuation means (36) associated with the, or each, drive unit (8). The, or each, drive unit (8) includes a roller (12) for frictionally engaging a wheel (4) of a trailer and a motor (14) for driving the roller. The drive unit mounting (6) is suitable for securing the drive unit (8) to a trailer, the, or each, drive unit (8) is movably coupled to the drive unit mounting (6). The, or each, actuation means (36) is coupled to the drive unit mounting (16) such that, when actuated, the actuation means (36) causes the roller (12) with which it is associated to move relative to the drive unit mounting (6) along a translational axis so that, in use, the actuation means (36) can be actuated to move the roller (12) between an engaged position, in which the roller (12) is engaged with the wheel (4) of a trailer, and a released position, in which the roller (12) is not engaged with the wheel (4) of a trailer. The or each drive unit (8) comprises a gear arrangement (46,48) including an actuation means (36) arranged for rotational movement about an axis of rotation which is non-parallel and non-collinear with the translational axis, wherein rotational movement of the actuation means (36) causes the roller (12) to move relative to the drive unit mounting (16).

## Description

### BACKGROUND

### a. Field of the Invention

The present invention relates to apparatus for moving trailers and in particular to apparatus for moving caravans.

### b. Related Art

Trailers, which term will be used herein to include caravans, are typically non-motorised wheeled devices which are usually moved by being hitched to an automobile and towed behind it. When such towing is not practical, for example for moving a short distance, re-positioning or moving in a confined space the trailer may be manually moved by dragging or pushing. However, such manual moving of the trailer is labour intensive and may be extremely difficult, especially with a heavy trailer, or on uneven or inclined ground.

Various devices are known to assist a user in such situations. These devices include manually driven jockey wheels and motorised jockey wheels, but these devices will include small wheels, which may encounter problems on particularly rough terrain.

Another known device drives the wheels of the trailer by using motorised rollers which engage with the tyres on the wheels of the trailer. The wheels of the trailer can then be driven by causing the traction rollers to rotate.

It is desirable to disengage the traction rollers during towing of the trailer and it is known to move the traction rollers substantially linearly towards or away from the wheel.

Such linear methods necessitate a steep increase in force and required effort after engagement is initially achieved in order to achieve the high friction engagement between roller and tyre required to enable the roller to transfer torque to the wheel. The high friction engagement requires a significant force to be maintained forcing the roller onto the tyre. The steep increase in force is required to overcome tyre deformation due to the tyre being inflated and friction within the actuation mechanism.

In order to maintain the required high friction engagement, it is known to include an over-centre type mechanism in the actuation means. However, the effort required during actuation peaks immediately prior to the over-centre mechanism moving over-centre. At this moment the mechanism may be both uncomfortable and unstable to operate. Indeed the increase in force puts significant stresses, not only on the user, but on the mechanism and related structure and this can lead to component, or more often, failure of welds formed during construction.

It is also known to use a cross actuation bar to couple the actuating means on each side of the caravan which allows engagement of the rollers on both sides of the caravan at the same time. Such cross actuation bars are often option features and are typically removable.

Some examples of prior art devices are described in GB 2 371 278 A, DE 270 53 18 A and DE 171 04 95 U.

### SUMMARY OF THE INVENTION

According to a first aspect of the invention there is provided apparatus for moving a trailer, the apparatus comprising at least one drive unit, a drive unit mounting and an actuation means associated with the, or each, drive unit, wherein:
the, or each, drive unit comprises a roller for frictionally engaging a wheel of a trailer and a motor for driving the roller;
the drive unit mounting is suitable for securing the drive unit to a trailer, the, or each, roller being movably coupled to the drive unit mounting;
the, or each, actuation means is coupled to the drive unit mounting such that, when actuated, the actuation means causes the roller with which it is associated to move relative to the drive unit mounting so that, when mounted on a trailer, the actuation means can be actuated to cause translational movement of the roller along a translational axis between an engaged position, in which the roller is engaged with the wheel of a trailer, and a released position, in which the roller is not engaged with the wheel of a trailer; and
wherein the or each drive unit comprises a gear arrangement including the actuation means arranged for rotational movement about an axis of rotation which is non-parallel and non-collinear with the translational axis, wherein rotational movement of the actuation means about the axis of rotation is converted to translational movement of the roller along the translational axis thereby causing the roller to move relative to the drive unit mounting.

By using the gear arrangement, a reliable actuation of the roller between the engaged position and released position can be achieved. The gearing preferably gives the user a mechanical advantage, thereby reducing the effort to rotate the actuation means to achieve sufficient engagement between the roller and the wheel of the trailer to avoid the roller slipping during use.

The motor may be fixed to its associated roller so that they move together when the actuation means is turned. Alternatively the motor may be connected to the roller by a flexible or moveable connection which permits the roller to move relative to the motor.

By having the axis of rotation at an angle to the translational axis, sufficient space at the side of the trailer may be provided to permit the actuation means to be coupled to a torque applicator, such as a wrench, wheel brace or motorised tool, without the torque applicator coming into contact with the trailer when in use, or with other parts of the drive unit. Preferably the angle between the axes (or between planes containing the axes) is substantially 90° so that the actuation means projects outwardly from the trailer. This provides ease of access and a simpler gearing arrangement. In one embodiment the gear arrangement is a bevel gear, notably a mitre gear; in another embodiment the gear arrangement may be a worm gear; in a further embodiment the gear arrangement may be a rack-and-pinion gear.

The apparatus preferably comprises two drive units so that a drive unit can drive each side of the trailer. The drive unit mounting preferably comprises an elongate beam. In one embodiment a first drive unit is coupled to the elongate beam at or adjacent a first end and a second drive unit is coupled to the elongate beam at or adjacent a second end. This allows a single mounting to be used to secure both drive units to the trailer. The elongate beam is preferably hollow and is preferably arranged so that the elongate beam can be extended or shortened to suit a particular width of trailer. The elongate beam may comprise three sections, a centre section and first and second end sections, the first and second end sections being dimensioned such that they slide within or over the centre section to allow the overall length of the elongate beam to be adjusted. The sections can preferably be secured relative to one another when the desired length has been reached.

In one embodiment the elongate beam extends substantially along the axis of rotation and a linkage may extend within the elongate beam to couple the first actuation means to the second actuation means so that rotation of one actuation means causes a corresponding rotation of the other. This allows cross actuation of the actuation means so that a user need not separately actuate the actuation means on each side of the trailer. The linkage will typically be in the form a bar, and the term "link bar" will be used herein for convenience. However it will be understood that the invention is not limited to this embodiment. The link bar transmits a rotation motion therealong and is therefore unlikely to suffer significant distortion. The beam may not extend along the axis of rotation and/or the link bar may not extend within the elongate beam, but such an arrangement provides reduced packaging space required and the protection afforded to the link bar by the elongate beam.

The invention extends to a trailer having wheels, the trailer being fitted with apparatus for moving said trailer as described above.

### BRIEF DESCRIPTION OF THE DRAWINGS

The invention will now be further described, by way of example, with reference to the accompanying drawings, in which:
Figure 1 shows a schematic view from above of a trailer fitted with apparatus for moving said trailer in accordance with one embodiment of the invention;
Figure 2 shows the view in Figure 1, but with the floor and chassis rail of the trailer removed;
Figure 3 is a perspective view of a drive unit in accordance with another embodiment of the invention;
Figure 4 illustrates the gear arrangement of the drive unit of Figure 3;
Figure 5 shows sectional views of the apparatus of Figure 3; and
Figure 6 is a perspective view of a remote control unit for use with the device of Figure 3.

### DETAILED DESCRIPTION

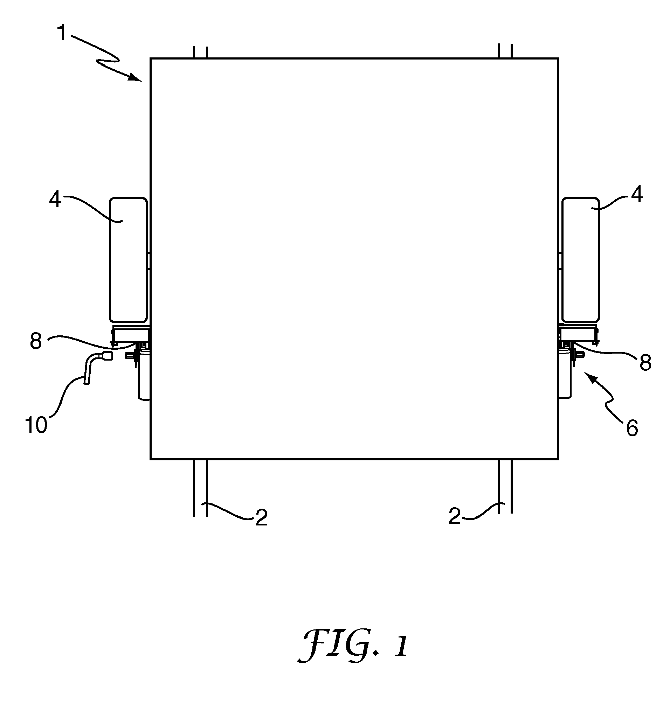

Figure 1 shows a trailer floor 1 having chassis rails 2 and wheels 4. The trailer (not shown) also includes apparatus 6 for moving the trailer. The apparatus 6 includes drive units 8 which can be engaged with the wheels 4 using a wrench or wheel brace 10 as will be explained in more detail below.

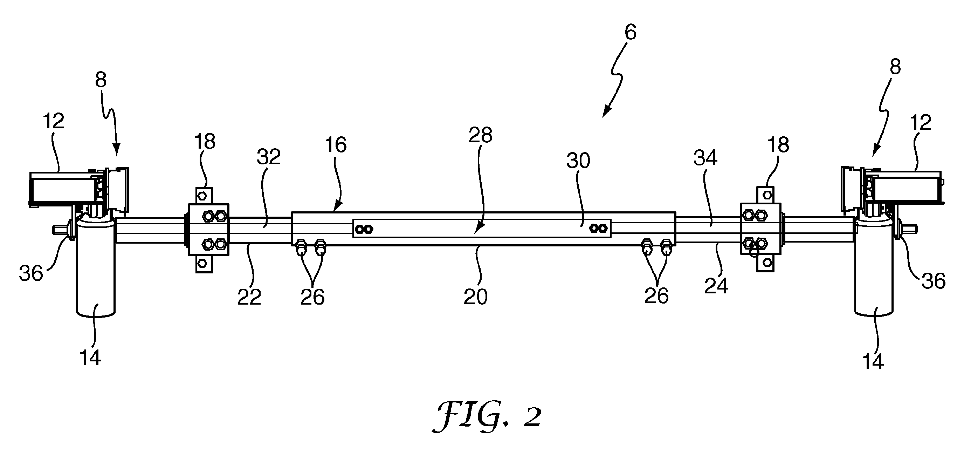

Figure 2 shows a view from above of the apparatus 6 of Figure 1. The apparatus comprises two drive units 8. Each drive unit 8 comprises a roller 12 for frictionally engaging a wheel 4 of a trailer and a motor 14 for driving the roller 12. The apparatus 8 includes a mounting 16 which is suitable for securing to the chassis rails 2 of the trailer using brackets 18. The drive unit mounting 16 is in the form of a beam which comprises three beam sections, a centre section 20 and first and second end sections 22,24. The end sections 22,24 are dimensioned so that they slide within the centre section 20 so that the length of the beam can be adjusted. The end sections 22,24 are secured relative to the centre section 20 using screws 26.

The apparatus includes a link bar 28 which extends through the drive unit mounting 16. The link bar comprises three bar sections, those being a centre bar section 30 and first and second end bar sections 32,34 which are dimensioned to allow length adjustment as detailed above. The end bar sections 32,34 engage with the centre bar section 30 so that torque can be transmitted along the link bar 28.

The link bar 28 can couple together actuation means 36 which are associated with each drive unit 8 so that both actuation means 36 may be actuated by rotation of one as will be described in more detail below.

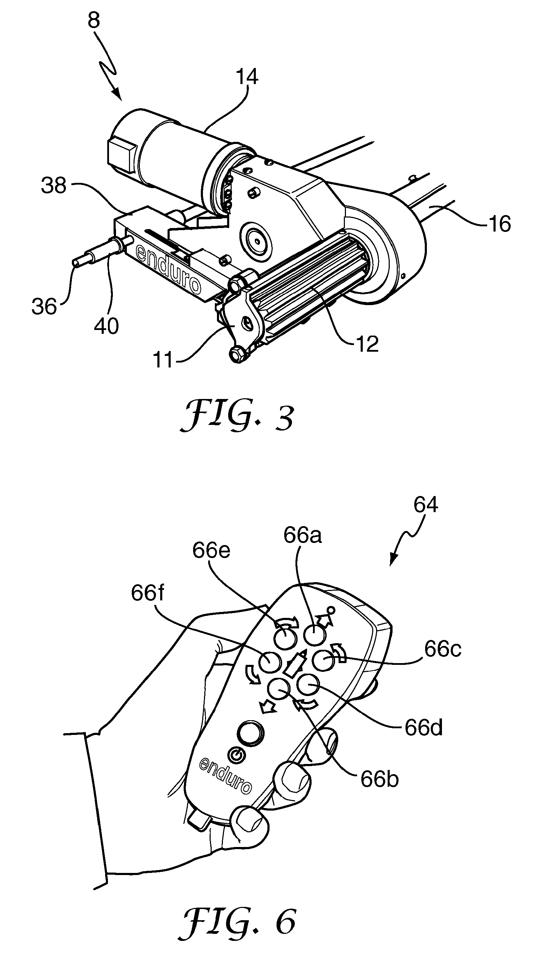

Operation of the drive units 8 will be described with reference to the embodiment of Figures 3-5. This embodiment differs from the embodiment of Figure 2 in that the link bar 28 is provided separately from the drive unit mounting 16. The actuation means comprises a spindle 36, in this example a 19 mm hex-spindle 36 which may be turned by a suitable torque applicator such as a wrench, a wheel-brace or an electric drill. The roller 12 is rotatably mounted in a roller mounting 11, which is movable so as to adjust the roller 12 between the engaged position and the released position.

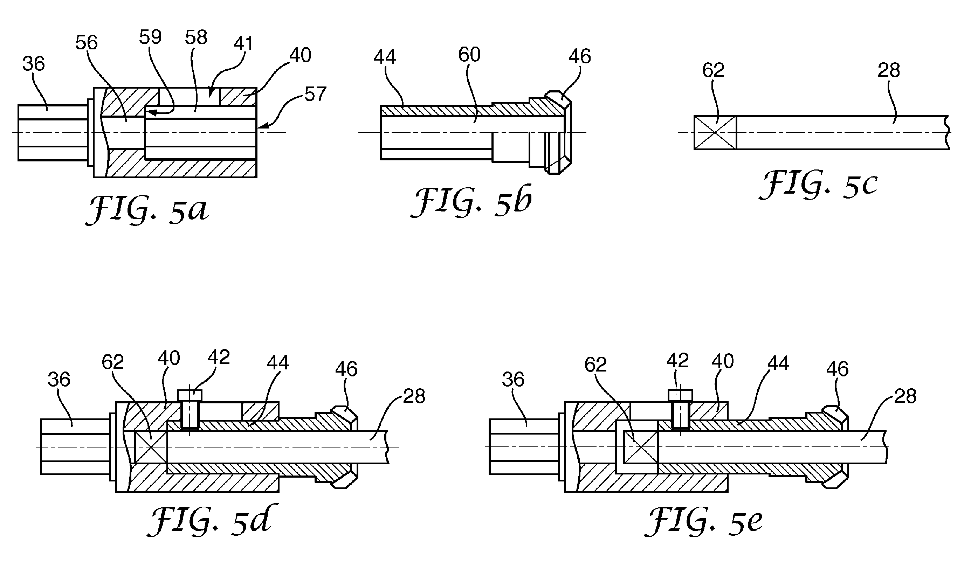

The spindle 36 is secured to or formed integrally with a sleeve member 40. Referring now to Figure 5a, the sleeve member 40 has a central opening 57 at the end opposite to the spindle 36. The opening 57 provides access to an internal passage which in this example has a first portion 58 with a 19 mm hexagonal shape and a second portion 56 with a 12 mm square shape. An insert 44 (Figure 5b) having a hexagonal shaft of 19 mm external diameter terminates in a bevel drive gear 46. The insert 44 can be inserted into the first portion 58 of the sleeve member 40 until the leading end of the insert 44 abuts an internal shoulder 59 where the first portion 58 joins the second portion 56. The sleeve member 40 has a slot 40 which permits the insert 44 to be slidably retained therein by fixing means 42, in this example, a bolt.

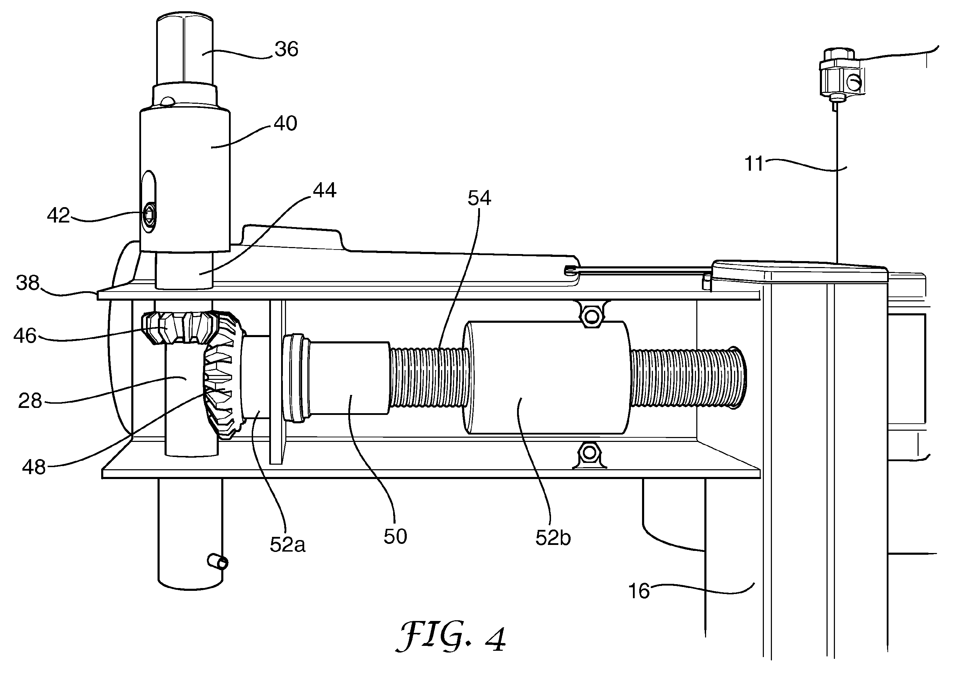

Referring now to Figure 4, rotatably mounted within a housing 38 of the drive means 8 is a bolt 50 which has at one end a bevel driven gear 48 and is provided with an external screw thread. The screw thread is disposed within a complementary internal screw thread in the roller housing 11, and the bolt 50 is rotatably journalled in bearings 52a, 52b. The gears 46, 48 form a bevel gear, which in this example is a mitre gear, whereby turning of the spindle 36 about a first axis of rotation turns the bolt 50 about a second axis of rotation at 90° to the first axis. Turning of the bolt 50 in one of a clockwise or counterclockwise direction moves the roller mounting 11 towards the gears 46,48 along a translational axis, while turning of the bolt 50 in the opposite direction moves the roller mounting 11 away from the gears 46,48. Thus, appropriate turning of the spindle 36 moves the roller 12 towards and away from the tyres 4 of the trailer. Bevel gearing gives the user a geared advantage, which means that it can take little effort to rotate the spindle to achieve sufficient engagement of the roller 12 with the tyre 4. The spindle 36 may be operated with a cordless drill or other suitable torque applicator to make engagement and disengagement of the rollers 12 quick and easy. Because the spindle 36 projects out from the surface of its housing 38 and away from the trailer to which the drive unit 8 will be mounted, the user has plenty of space in which to position whatever torque applicator is to be used.

As shown in Figures 5d and 5e, the link bar 28 (Figure 5c) is disposed within an internal passage 60 in the insert 44. The link bar 28 in this example has a square face 62 which is a complementary fit for the second portion 56 of the internal passage of the sleeve member 40. With the sleeve member 40 fully pushed onto the insert 44 (Figure 5d), the insert 44 and the link bar 28 are both engaged by the sleeve member 40 so that turning of the spindle 36 simultaneously turns the insert 44 and the link bar 28. The link bar 28 will in turn cause rotation of the sleeve member of the drive member on the opposite side of the trailer (when that sleeve member is also fully pushed onto its insert), and hence will turn the associated insert and drive roller mounting. In this configuration, actuation of the actuation means on one side will adjust both drive means 8 simultaneously.

If it is desired to actuate only one drive means 8, this can be done by the user sliding the sleeve member 40 away from the housing 38, as illustrated in Figure 3 and Figure 5e. In this configuration, the sleeve member 40 continues to engage with the insert 40, but the link bar 28 is no longer engaged in the corresponding second portion 56 within the insert 44. Turning the spindle 36 does not turn the link bar 28. Because the spindle 36 can be disengaged from the link bar by this dog clutch mechanism the amount of roller pressure onto the tyres can be adjusted individually for either side; this can sometimes be necessary if one tyre has slightly more tread than the other or if the tyre pressures at the time differ.

In a preferred embodiment, the motor 14 of either drive unit 8 may be operated by a remote control 64. Button 66a actuates both motors 14 to drive the wheels of the trailer forward. Button 66b reverses both motors to drive the trailer backwards. Buttons 66c and 66e will each drive one of the motors to move its associated wheel forwards, and buttons 66d and 66f will reverse these movements. To turn the trailer in a circle, opposite buttons 66e and 66b or buttons 66c and 66f are pressed simultaneously according to whether the turn is to be clockwise or anticlockwise. It would also be possible to use a motor turn the drive gear 46, and this could also be actuated by means of the remote control 64.

Although the invention has been described with reference to a particular bevel gear arrangement, it will be understood that other gear arrangements may be used, in which the axis of rotation of the actuation member 36 is non-parallel and non-collinear to the translational axis along which the roller mounting 11 moves. For example, a rack-and-pinion gear arrangement or a worm gear may be used.

It should be understood that the invention has been described above by way of example only and that modifications in detail may be made without departing from the scope of the invention as described in the claims. In particular, the shape and the dimensions of the various parts are described by way of non-limiting example only. One skilled in the art of engineering will recognise that many other embodiments are possible within the scope of the invention once the invention is properly understood.

The disclosures of United Kingdom Patent Application No. 0617403.1, from which this application claims priority, and of the abstract accompanying this application, are incorporated herein by reference in their entirety.

## Claims

1. Apparatus for moving a trailer, the apparatus comprising at least one drive unit, a drive unit mounting and an actuation means associated with the, or each, drive unit, wherein:
the, or each, drive unit comprises a roller for frictionally engaging a wheel of a trailer and a motor for driving the roller;
the drive unit mounting is suitable for securing the drive unit to a trailer, the, or each, roller being movably coupled to the drive unit mounting;
the, or each, actuation means is coupled to the drive unit mounting such that, when actuated, the actuation means causes the roller with which it is associated to move relative to the drive unit mounting so that, when mounted on a trailer, the actuation means can be actuated to cause translational movement of the roller along a translational axis between an engaged position, in which the roller is engaged with the wheel of a trailer, and a released position, in which the roller is not engaged with the wheel of a trailer; and
wherein the or each drive unit comprises a gear arrangement including the actuation means arranged for rotational movement about an axis of rotation which is non-parallel and non-collinear with the translational axis, wherein rotational movement of the actuation means about the axis of rotation is converted to translational movement of the roller along the translational axis thereby causing the roller to move relative to the drive unit mounting.

2. Apparatus as claimed in claim 1, wherein the gear arrangement is selected from a bevel gear arrangement, a worm gear arrangement and a rack-and-pinion gear arrangement.

3. Apparatus as claimed in claim 1, wherein the gear arrangement is a bevel gear arrangement.

4. Apparatus as claimed in any of claims 1-3, wherein the axis of rotation is at substantially 90° to the translational axis.

5. Apparatus as claimed in any one of claims 1-4, wherein the gear arrangement comprises a drive gear and a driven gear, said driven gear including a threaded shaft portion; and wherein the roller is mounted in a roller mounting, the roller mounting having an internal screw thread in which is received said threaded shaft portion, wherein rotation of the actuation means will cause rotation of said threaded shaft portion and translational movement of said roller mounting.

6. Apparatus as claimed in any preceding claim, in which the apparatus comprises a first drive unit having a first actuation means and a second drive unit having a second actuation means.

7. Apparatus as claimed in claim 6, in which a link bar connects the first actuation means and the second actuation means so that rotation of one actuation means causes a corresponding rotation of the other.

8. Apparatus as claimed in claim 7, wherein at least one of the first actuation means and the second actuation means can be releasably decoupled from the link bar so that rotation of one of said actuation means does not cause rotation of the other.

9. Apparatus as claimed in claim 8, wherein at least one of the first actuation means and the second actuation means is coupled to the link bar by a dog clutch.

10. Apparatus as claimed in any one of claims 6-9, in which the drive unit mounting comprises an elongate beam, the first drive unit being movably coupled to the elongate beam at or adjacent a first end and the second drive unit being movably coupled to the elongate beam at or adjacent a second end.

11. Apparatus as claimed in any of claims 7-9, wherein the drive unit mounting comprises an elongate beam, the first drive unit being movably coupled to the elongate beam at or adjacent a first end and the second drive unit being movably coupled to the elongate beam at or adjacent a second end; and wherein the link bar is disposed through the elongate beam.

12. Apparatus for moving a trailer, the apparatus comprising at least one drive unit, a drive unit mounting and an actuation means associated with the, or each, drive unit, wherein:
the, or each, drive unit comprises a roller for frictionally engaging a wheel of a trailer and a motor for driving the roller;
the drive unit mounting is suitable for securing the drive unit to a trailer, the, or each, roller being movably coupled to the drive unit mounting;
the, or each, actuation means is coupled to the drive unit mounting such that, when actuated, the actuation means causes the roller with which it is associated to move relative to the drive unit mounting so that, when mounted on a trailer, the actuation means can be actuated to cause translational movement of the roller along a translational axis between an engaged position, in which the roller is engaged with the wheel of a trailer, and a released position, in which the roller is not engaged with the wheel of a trailer; and
wherein the or each drive unit comprises a gear arrangement including the actuation means arranged for rotational movement about an axis of rotation which is non-parallel and non-collinear with the translational axis, the gear arrangement being selected from a bevel gear arrangement, a worm gear arrangement and a rack-and-pinion gear arrangement wherein rotational movement of the actuation means about the axis of rotation is converted to translational movement of the roller along the translational axis thereby causing the roller to move relative to the drive unit mounting.

13. Apparatus for moving a trailer, the apparatus comprising at least a first drive unit and a second drive unit, a drive unit mounting, a first actuation means associated with the first drive unit, and a second actuation means associated with the second drive unit, wherein:
each drive unit comprises a roller for frictionally engaging a wheel of a trailer and a motor for driving the roller;
each drive unit mounting is suitable for securing the associated drive unit to a trailer, each roller being movably coupled to the drive unit mounting;
each actuation means is coupled to the drive unit mounting such that, when actuated, the actuation means causes the roller with which it is associated to move relative to the drive unit mounting so that, when mounted on a trailer, the actuation means can be actuated to cause translational movement of the roller along a translational axis between an engaged position, in which the roller is engaged with the wheel of a trailer, and a released position, in which the roller is not engaged with the wheel of a trailer;
wherein each drive unit comprises a gear arrangement including the actuation means arranged for rotational movement about an axis of rotation which is non-parallel and non-collinear with the translational axis, wherein rotational movement of the actuation means about the axis of rotation is converted to translational movement of the roller along the translational axis thereby causing the roller to move relative to the drive unit mounting; and
the apparatus further comprising a linkage which can operatively connect the first actuation means to the second actuation means so that rotation of one of said actuation means will cause rotation of the other; wherein at least one of the first actuation means and the second actuation means can be releasably decoupled from the linkage so that rotation of one of one of the actuation means does not cause rotation of the other.

14. A trailer having at least one wheel, the trailer being fitted with apparatus as claimed in any preceding claim.
